# EUROPEAN PATENT SPECIFICATION

(11) **EP 3 406 874 B1**
(45) Date of publication and mention of the grant of the patent: **19.02.2020**
(21) Application number: 18173697.6
(22) Date of filing: 22.05.2018
(51) Int. Cl.: F01N 3/20, F01N 13/14, F01N 3/021, F01N 13/00, F02M 26/15

(54) **EGR LAYOUT OF AN INTERNAL COMBUSTION ENGINE COMPRISING AN AFTER TREATMENT SYSTEM**
AGR-LAYOUT EINES VERBRENNUNGSMOTORS MIT EINEM NACHBEHANDLUNGSSYSTEM
AGENCEMENT DE RECIRCULATION DES GAZ D'ÉCHAPPEMENT D'UN MOTEUR À COMBUSTION INTERNE COMPRENANT UN SYSTÈME DE POST-TRAITEMENT

(30) Priority: 22.05.2017 IT 201700055359
(43) Date of publication of application: 28.11.2018
(73) Proprietor: FPT Motorenforschung AG, 9320 Arbon (CH)
(72) Inventor: BORG, Jonathan, 9008 ST. GALLEN (CH)
(74) Representative: Fiume, Orazio

(56) References cited:
- EP-A1- 0 980 966
- EP-A2- 1 369 558
- DE-A1- 19 837 509
- FR-A3- 2 930 286

## Description

### Field of the invention

The present invention relates to an EGR layout of an internal combustion engine comprising an after treatment system (ATS), in particular in the field of heavy duty vehicles.

### Description of the prior art

EGR is a well known strategy consisting in recirculating exhaust gas in order to limit NOx production.

It is referred to as "low pressure" when the exhaust gas is withdrawn downstream of at least one turbine arranged on the exhaust line and introduced in the intake line upstream of at least a compressor.

In contrast, it is referred to as "high pressure" when the exhaust gas is withdrawn upstream of the at least one turbine and introduced immediately upstream of the engine intake.

An after treatment system (ATS) is connected on the exhaust line of the internal combustion engine and, according to the engine cycle implemented, gasoline/diesel, it comprises a certain number of devices to reduce/eliminate pollutants contained in the exhaust gas, such as NOx, HC, particulate.

EGR and NOx catalyst can implemented simultaneously.

DE 198 37 509 A1 and EP 0 980 966 A1 disclose solutions in which a second exhaust pipe is arranged coaxially or concentrically to a first exhaust pipe, so as to surround the first exhaust pipe and to guide an exhaust gas flow backwards to a storage container. Also the main catalyst and the precatalyst are surrounded by the second exhaust pipe.

### Summary of the invention

The present invention provides an assembly according to claim 1, defined by an EGR system of an internal combustion engine and by an after treatment system ATS.

The main object of the present invention is to provide a EGR layout of an internal combustion engine comprising an after treatment system (ATS) wherein the EGR and the ATS interact strictly.

Usually, NOx reduction measures such as retarding the combustion or low-pressure EGR are strongly used during engine warm up, due to the incapacity of the ATS to convert NOx. It is well known that the ATS and in particular the SCR (selective reduction catalyst) need to reach the so called light off temperature, which is in the range of about 250°C.

The main principle of the invention is to realize an ATS wherein at least one first component of the ATS has a canning defining a chamber enveloping the first ATS component, wherein the first component has a longitudinal development with an inlet and an outlet arranged at opposite ends, so as the inlet is suitable to be connected to the combustion engine exhaust line and the outlet is suitable to be connected to a further ATS component or to a muffler. The first ATS component has an internal opening communicating with said chamber defined by the canning. The canning, in turn, has an external opening, suitable to be connected to an EGR pipe.

In other words, the EGR gas is withdrawn though the chamber enveloping, preferably completely, the at least said first ATS component or equivalently the EGR pipe defines the canning that generates the chamber enveloping the ATS component. Preferably, the present strategy is carried out on the DPF and/or on a component downstream of the DPF in order to avoid soot recirculation.

Preferably, said internal opening is arranged close to said outlet, namely downstream of the active portion - core - of the first ATS component and said external opening is disposed close to said inlet in order to obtain a countercurrent gas flow with respect to the exhaust gas flow crossing the first ATS component.

Therefore, a portion of the exhaust gas, after having crossed said first ATS component is recirculated through a conduit which partially surrounds the same first ATS component by increasing its thermal insulation from the ambient air.

Advantageously, the thermal content of said portion of said exhaust gas is exploited to insulate said first ATS component and, on the other side, such portion of the exhaust gas is refreshed so as possibly an EGR cooler is avoided or reduced in terms of cooling capacity.

According to a preferred embodiment of the invention, said first ATS component is one among SCR, DPF and DOC.

The acronyms are well known to the skilled person in the art: DPF indicates a diesel particulate filter and DOC indicates a Diesel oxidation catalyst.

Preferably, the SCR is an active SCR, namely provided of its own dosing module for dosing an urea based reducing agent immediately upstream of the SCR.

"Upstream" or "downstream" are designated according to the gas circulation.

According to a preferred embodiment of the invention, two, first and second, ATS components are enveloped in said single canning, in such a way said chamber wraps both the two ATS components. The first ATS component is arranged upstream or downstream of said second ATS component. According to a preferred embodiment of the invention, three ATS components are included in said canning. Thus, a single canning envelops all together two or three or more ATS components. Preferably, a DOC followed immediately by a DPF, which in turn is followed immediately by an SCR with its own dosing module as disclosed above, according said gas circulation. According to this embodiment, said internal opening is arranged in the connection between the DPF and the SCR dosing module, connecting operatively the chamber defined by the canning and the exhaust line.

The external opening according to a preferred ATS layout is arranged close to the inlet of the DOC, in such a way the portion of the exhaust gas introduced into said chamber flows countercurrent with respect to the exhaust gas coming from the internal combustion engine and entering in the DOC inlet. Preferably, said internal opening comprises a mouth oriented obliquely towards the outlet of the group of three, however the ATS layout depends on many factors such as the internal combustion engine and the ATS characteristics itself.

According to the ATS installation, said mouth is arranged downwards.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
Fig. 1 shows a first embodiment, according to the teaching of the invention and
- Fig. 2 shows a second embodiment, according to the teachings of the invention;
- Fig. 3 shows a third embodiment, according to the teachings of the invention and based on the embodiment of figure 2.

The same reference numerals and letters in the figures designate the same or functionally equivalent parts.
The drawings mainly refer to a low pressure EGR, however, the same concept can be implemented in a high EGR scheme where the ATS component is arranged upstream of the turbine, for example a compound turbine, see for example EP2886827.

According to the present invention, the term "second element" does not imply the presence of a "first element", first, second, etc.. are used only for improving the clarity of the description and they should not be interpreted in a limiting way.

### Detailed description of the preferred embodiments

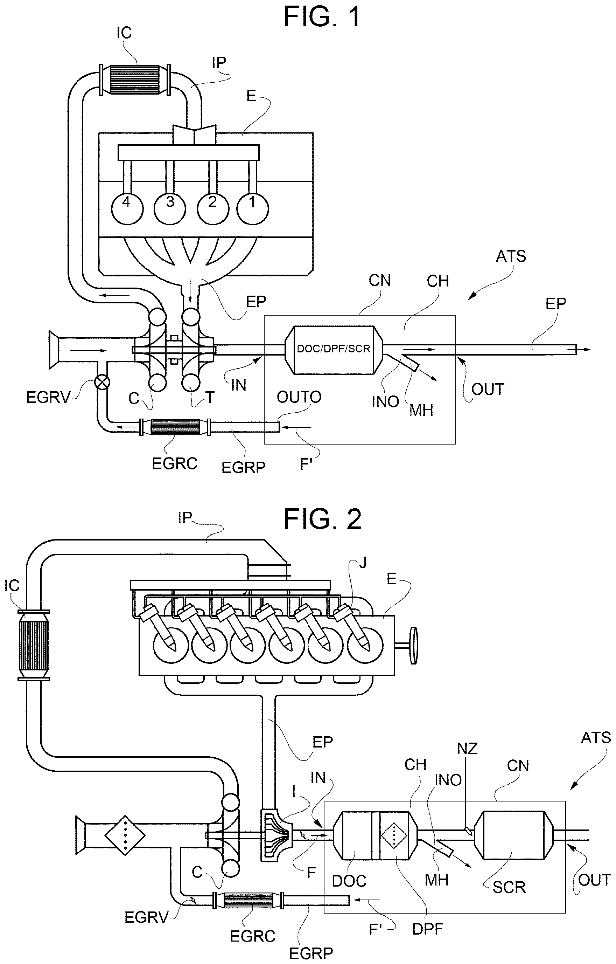

Figures 1 and 2 disclose an internal combustion engine E, preferably four-stroke type.

It comprises, for example four cylinders 1 - 4, as disclosed on figure 1 or six as disclosed on figure 2, however, their number is not relevant.

The internal combustion engine has an intake line IP and an exhaust line EP. Fresh air is sucked through the intake pipe, and then it is mixed with fuel such as gasoline or LPG or natural gas or CNG. Fuel injectors J are associated to the combustion engine to dose the fuel in the cylinders. The exhaust gas, as known, is delivered to the ambient through an exhaust line EP to which an after-treatment system ATS is connected in order to reduce the pollutants contained in the exhaust gas.

Preferably, the engine has a turbocharger comprising a compressor C arranged on the intake line to compress the fresh air and a turbine T arranged on the exhaust line EP arranged to exploit the energy content in the exhaust gas to drive in rotation the compressor.

An EGR system connects directly through a simple pipe EGRP a point of the exhaust line with a point of the intake line in order to recirculate exhaust gas produced by the combustion in the internal combustion engine cylinders.

The simple pipe permit recirculation without any gas accumulation.

On the pipe EGRP is arranged a valve EGRV to control the amount of recirculated gas and optionally a cooler EGRC to refresh such exhaust gas before its mixing at the intake. Such valve EGRV can be arranged in the chamber defined by the EGR pipe itself, for example in the EGR pipe portion protruding within the chamber CH.

Alternatively, the EGR valve can be associated with the internal opening INO communicating the exhaust line with the chamber CN.

According to the present invention, a first component of the ATS, such as a DOC and/or a DPF and/or an SCR has a canning CN defining a chamber CH enveloping the first ATS component itself.

The first component has a longitudinal development with an inlet IN and an outlet OUT arranged at opposite ends thereof, so as the inlet is suitable to be connected to the combustion engine exhaust line and the outlet is suitable to be connected to a further ATS component or to a muffle not shown.

Between the inlet and the outlet, a catalyst core, as usual, is arranged, to achieve a specific reaction or the trapping of a pollutant contained in the exhaust gas.

The first ATS component has an internal opening INO communicating with said chamber defined by the canning. The canning, in turn, has an external opening OUTO, suitable to be connected to said simple EGR pipe EGRP.

Preferably, said internal opening is arranged close to said outlet, namely downstream of the core of the first ATS component and said external opening is disposed close to said inlet IN in order to obtain a countercurrent gas flows with respect to the exhaust gas flow crossing the first ATS component from the engine to the ambient.

Therefore, a portion of the exhaust gas, after having crossed said first ATS component is recirculated through a conduit which, partially surrounds the same first ATS component by increasing its thermal insulation from the ambient air.

According to a preferred embodiment of the invention, said first ATS component is one among SCR, DPF and DOC.

The SCR is preferably an active SCR, namely provided of its own dosing module for dosing a urea based reducing agent immediately upstream of the SCR and indicated with NZ, indicating generically a nozzle.

According to another, not shown, preferred embodiment of the invention, two, a first and a second, ATS components are enveloped in said single canning, in such a way said chamber wraps both the two ATS components. The first ATS component is arranged upstream of said second ATS component.

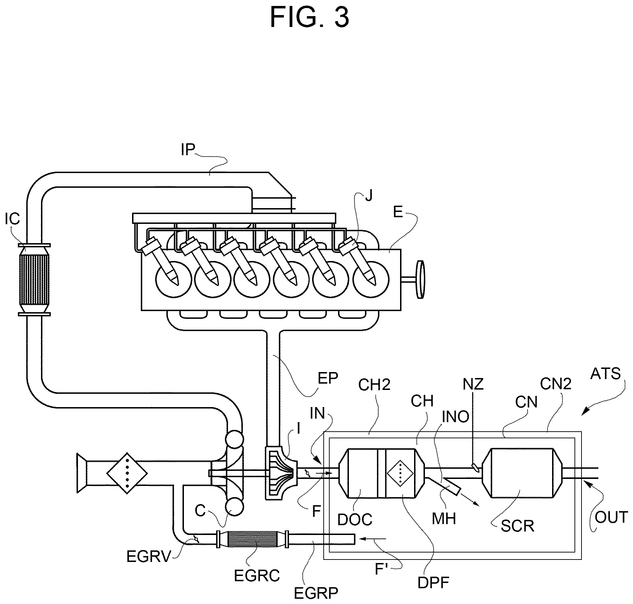

Therefore, one chamber envelops said first and second ATS components, however, the internal opening INO is arranged between the first and second ATS. This concept is clearly disclosed in figures 2 and 3.

According to figure 2 or 3, three ATS components are included in said canning: said first ATS component, a second ATS component and a third ATS component, wherein said first ATS component is arranged upstream or downstream of said third ATS component or upstream or downstream of said third and fourth ATS component. Thus, a single canning envelops all together said three (or more) ATS components and the internal opening INO is between the first and second or between the second and third ATS components.

The arrangement of the internal opening INO between two ATS component is relevant during transients.

Indeed the ATS component or components arranged upstream of the internal opening INO are benefited, because the thermal capacity of the subsequent components affect less the temperature within the chamber CH.

A DOC is followed immediately by a DPF, which in turn is followed immediately by an SCR with its own dosing module as disclosed above, according said gas circulation.

The dosing module, as usual is arranged immediately upstream of the SCR.

According to this embodiment, said internal opening INO is arranged in the connection between the DPF and the SCR dosing module connecting operatively the chamber CH defined by the canning CN and the exhaust line. It is clear that the interconnection of the ATS components contribute to define the exhaust line, which preferably also includes a muffle, not shown.

According this embodiment the efficiency of the DOC and of the DPF is achieved more quickly. In contrast the SCR efficiency is achieved later than the case in which the internal opening INO was arranged downstream of the SCR. However, this embodiment can be advantageously implemented in those cases in which also a NOX accumulator is implemented, such as an NSC or PNA arranged as fourth ATS component in any suitable point along with the ATS. Thus, at cold start, the DOC and DPF are helped to reach rapidly the operation condition, while NOx are accumulated till the light of temperature of the SCR.

NSC (NOx storage catalyst) and PNA (Passive NOx adsorber) are well known to the skilled person in the art.

Therefore, according to the heating priority of the ATS components, they are allocated upstream or downstream of the internal opening INO.

The external opening, according to a preferred ATS layout, is arranged close to the inlet of the DOC, in such a way the portion of the exhaust gas introduced into said chamber CH flows countercurrent with respect to the exhaust gas coming from the internal combustion engine and entering in the DOC inlet.

Preferably, said internal opening INO comprises a mouth MH oriented obliquely towards the outlet OUT of the component or of the group of (two or) three ATS components following the internal opening INO according to the exhaust gas flow circulation.

Such internal opening can be advantageously provided of a regulating valve to meter and even completely closure of the internal opening. Such valve, thus, works as an EGR valve.

Therefore, in contrast with respect to the known layout the EGR valve is arranged substantially in the canning of the ATS rather than on the "bridge" connecting the ATS with the inlet line.

According to the ATS installation in the vehicle layout, said mouth is arranged downwards exploiting the natural motion of the hot gas upwards.

Advantageously, at engine/ATS warm up it is known that the ATS is inefficient and thus the EGR flow is usually increased to limit the NOx production. Usually low pressure EGR is increased and/or high pressure EGR particularly if its cooler can be bypassed, otherwise part of the exhaust gas heat would be dispersed in the ambient through the coolant that usually refreshes the EGR cooler.

In such context, the EGR gas cross first the above chamber contributing to the thermal management of the ATS component included into the canning, and then reaches the combustion engine cylinders.

Preferably, the internal combustion engine is a Diesel one, however, the present invention can be advantageously implemented also in gasoline engines.

Figure 3 differs from figure 2 only for the presence of a second canning CN2 enveloping the same ATS component enveloped by the first canning CN. It defines a second chamber CH2 containing air or a fiber mat to hold air.

Such second chamber CH2 is preferably insulated from the ambient air and from the first chamber CH. Such second chamber has the aim to better thermally insulate the components of the ATS enveloped, by increasing the efficiency of the ATS and EGR system. Also in this case the EGR valve can be arranged in said first chamber.

According to a preferred implementation of the invention, an internal combustion engine is provided by a low pressure EGR and an ATS system according to the present invention, namely with the EGR pipe defining the canning of at least one ATS component.

In addition, the internal combustion engine implements also a traditional high pressure EGR provided of its own cooler and while the low pressure EGR is exploited at ATS warm up. The low pressure and high pressure EGR systems are selected alternatively or together to recirculate exhaust gas to control NOx emissions, and also in order to adjust the ATS working temperature.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Assembly defined by an EGR system of an internal combustion engine and by an after treatment system (ATS), the ATS comprising at least one first component (DOC, DPF, SCR) suitable to reduce/eliminate pollutants contained in exhaust gas of said combustion engine,
the EGR system comprising an EGR pipe (EGRP) suitable to connect a point of an exhaust line (EP) with a point of an inlet line (IP) of said internal combustion engine, wherein, the EGR pipe is shaped as a canning (CN) defining a chamber (CH) enveloping said at least one first ATS component;
wherein said at least one first ATS component comprises
- an inlet opening (IN) suitable to receive a flow (F) of combustion engine exhaust gas,
- an outlet opening (OUT) to transfer at least a portion of said flow; and wherein said canning comprises an external opening (OUTO) suitable to be connected to said inlet line (IP); **characterized in that** said at least one first ATS component further comprises an internal opening (INO) communicating with said chamber (CH) to transfer a remaining portion (F') of said flow to said chamber;
and **in that** said outlet opening (OUT) is operatively arranged to transfer said portion of said flow to a second ATS component and/or to a muffler.

2. The assembly according to claim 1, wherein said internal opening, external opening, inlet opening and outlet opening are arranged in such a way to induce a recirculated gas flow (F'), crossing said chamber, to move countercurrent with respect to said flow (F) produced by said internal combustion engine.

3. The assembly according to any of previous claims, wherein said first ATS component is a particulate trap (DPF) or a DOC or a DOC and DPF, preferably, arranged in one common canning.

4. The assembly according to any of the previous claims, wherein said first ATS component is arranged upstream of said second ATS component, such that, said internal opening (INO) is between said first and second ATS component.

5. The assembly according to claim 4, wherein said second component includes at least one from
- a Selective catalyst reduction (SCR),
- a Diesel oxidation catalyst (DOC),
- a clean up catalyst (CUC).

6. The assembly according to claim 5, wherein said SCR is an active SCR, provided of its own dosing module (NZ) for dosing a urea based reducing agent, arranged immediately upstream of the SCR.

7. The assembly according to any of the previous claims further comprising a further ATS component suitable to store NOX such as an NSC or a PNA.

8. The assembly according to any one of previous claims, wherein said canning defines a chamber enveloping said first ATS component and at least said second and/or further ATS component.

9. The assembly according to claim 8, wherein said internal opening (INO) is arranged downstream of a particulate filter DPF.

10. The assembly according to claim 9, wherein in succession, according to an exhaust gas circulation DOC, DPF, SCR are arranged, wherein said internal opening (INO) is disposed between said DPF and said SCR.

11. The assembly according to any one of previous claims, wherein said internal opening comprises a mouth oriented obliquely towards the following ATS component, according to an exhaust gas flow circulation.

12. The assembly according to any one of previous claims, further comprising an EGR valve (EGRV) also enveloped in said canning (CN).

13. Internal combustion engine comprising an assembly according to any one of the previous claims.

14. Internal combustion engine according to claim 13, comprising at least a turbo-supercharger (T, C) and wherein said EGR system defines a low pressure EGR system, such that said EGR pipe is connected upstream of a compressor (C) of said turbo-supercharger (T, C).

15. Internal combustion engine according to claim 14, further comprising a high pressure EGR system provided of its own cooler, and wherein said low pressure and said high pressure EGR systems are selected alternatively or together to recirculate a predetermined amount of exhaust gas to control NOx emissions, in order to adjust the ATS working temperature.

16. Vehicle comprising an internal combustion engine according to claims 13 - 15.

## Patentansprüche

1. Anordnung, die durch ein AGR-System eines Verbrennungsmotors und durch ein Nachbehandlungssystem (ATS) definiert ist, wobei das ATS mindestens eine erste Komponente (DOC, DPF, SCR) umfasst, die geeignet ist, um im Abgas des Verbrennungsmotors enthaltene Schadstoffe zu reduzieren/eliminieren,
wobei das AGR-System ein AGR-Rohr (EGRP) umfasst, das geeignet ist, einen Punkt einer Abgasleitung (EP) mit einem Punkt einer Saugleitung (IP) des Verbrennungsmotors zu verbinden,
wobei das AGR-Rohr als eine Hülle (CN) geformt ist, die eine Kammer (CH) definiert, die die mindestens eine erste ATS-Komponente einhüllt;
wobei die mindestens eine erste ATS-Komponente umfasst:
- eine Einlassöffnung (IN), die geeignet ist, eine Strömung (F) von Verbrennungsmotorabgas zu empfangen,
- eine Auslassöffnung (OUT), um zumindest einen Teil der Strömung zu übertragen; und
wobei die Hülle eine externe Öffnung (OUTO) umfasst, die geeignet ist, um mit der Saugleitung (IP) verbunden zu werden;
**dadurch gekennzeichnet, dass** die mindestens eine erste ATS-Komponente ferner eine interne Öffnung (INO) umfasst, die mit der Kammer (CH) in Verbindung steht, um einen verbleibenden Teil (F') der Strömung an die Kammer zu übertragen;
und dass die Auslassöffnung (OUT) wirksam angeordnet ist, um den Teil der Strömung an eine zweite ATS-Komponente und/oder an einen Auspufftopf zu übertragen.

2. Anordnung nach Anspruch 1, wobei die interne Öffnung, externe Öffnung, Einlassöffnung und Auslassöffnung auf eine derartige Weise angeordnet sind, dass sie eine rezirkulierte Gasströmung (F') herbeiführen, die die Kammer durchquert, um einen Gegenstrom in Bezug auf die vom Verbrennungsmotor erzeugte Strömung (F) zu bewegen.

3. Anordnung nach einem der vorangehenden Ansprüche, wobei die erste ATS-Komponente ein Partikelfilter (DPF) oder ein DOC oder ein DOC und DPF ist, vorzugsweise in einer gemeinsamen Hülle angeordnet.

4. Anordnung nach einem der vorangehenden Ansprüche, wobei die erste ATS-Komponente der zweiten ATS-Komponente vorgeschaltet angeordnet ist, sodass sich die interne Öffnung (INO) zwischen der ersten und der zweiten ATS-Komponente befindet.

5. Anordnung nach Anspruch 4, wobei die zweite Komponente mindestens eines enthält von:
- einer selektive katalytische Reduktion (SCR),
- einem Dieseloxidationskatalysator (DOC),
- einem Clean-Up-Katalysator (CUC).

6. Anordnung nach Anspruch 5, wobei die SCR eine aktive SCR ist, die durch ihr eigenes Dosiermodul (NZ) zum Dosieren eines Reduktionsmittels auf Harnstoffbasis bereitgestellt wird, das der SCR unmittelbar vorgeschaltet angeordnet ist.

7. Anordnung nach einem der vorangehenden Ansprüche, die ferner eine weitere ATS-Komponente umfasst, die geeignet ist, um NOX zu speichern, wie einen NSK oder PNA.

8. Anordnung nach einem der vorangehenden Ansprüche, wobei die Hülle eine Kammer definiert, die die erste ATS-Komponente und mindestens die zweite und/oder weitere ATS-Komponenten einhüllt.

9. Anordnung nach Anspruch 8, wobei die interne Öffnung (INO) einem Partikelfilter DPF nachgeschaltet angeordnet ist.

10. Anordnung nach Anspruch 9, wobei in Übereinstimmung mit einer Abgaszirkulation DOC, DPF, SCR nacheinander angeordnet sind, wobei die interne Öffnung (INO) zwischen dem DPF und dem SCR angeordnet ist.

11. Anordnung nach einem der vorangehenden Ansprüche, wobei die interne Öffnung einen Mund umfasst, der schräg zur folgenden ATS-Komponente ausgerichtet ist, in Übereinstimmung mit einer Abgasströmungszirkulation.

12. Anordnung nach einem der vorangehenden Ansprüche, die ferner ein AGR-Ventil (AGRV) umfasst, die auch in der Hülle (CN) eingehüllt ist.

13. Verbrennungsmotor, der eine Anordnung nach einem der vorangehenden Ansprüche umfasst.

14. Verbrennungsmotor nach Anspruch 13, der mindestens einen Turbolader (T, C) umfasst, und wobei das AGR-System ein Niedrigdruck-AGR-System definiert, sodass das AGR-Rohr einem Verdichter (C) des Turboladers (T, C) vorgeschaltet angebunden ist.

15. Verbrennungsmotor nach Anspruch 14, der ferner ein Hochdruck-AGR-System umfasst, das durch seinen eigenen Kühler bereitgestellt wird, und wobei das Niedrigdruck- und das Hochdruck-AGR-System alternativ oder gemeinsam ausgewählt werden, um eine vorbestimmte Menge an Abgas zu rezirkulieren, um NOx-Emissionen zu regeln, um die ATS-Arbeitstemperatur anzupassen.

16. Fahrzeug, das einen Verbrennungsmotor nach den Ansprüchen 13-15 umfasst.

## Revendications

1. Ensemble défini par un système EGR d'un moteur à combustion interne et par un système de post-traitement (ATS), l'ATS comprenant au moins un premier composant (DOC, DPF, SCR) approprié pour réduire/éliminer des polluants contenus dans le gaz d'échappement dudit moteur à combustion,
le système EGR comprenant un tuyau EGR (EGRP) approprié pour relier un point d'une conduite d'échappement (EP) à un point d'une conduite d'admission (IP) dudit moteur à combustion interne,
dans lequel, le tuyau EGR est formé comme un gainage (CN) définissant une chambre (CH) enveloppant ledit au moins un premier composant ATS ;
dans lequel ledit au moins un premier composant d'ATS comprend
- une ouverture d'admission (IN) appropriée pour recevoir un flux (F) de gaz d'échappement de moteur à combustion,
- une ouverture de refoulement (OUT) pour transférer au moins une partie dudit flux ;
et
dans lequel ledit gainage comprend une ouverture externe (OUTO) appropriée pour être reliée à ladite conduite d'admission (IP) ;
**caractérisé en ce que** ledit au moins un premier composant ATS comprend en outre une ouverture interne (INO) communiquant avec ladite chambre (CH) pour transférer une partie restante (F') dudit flux à ladite chambre ;
et **en ce que** ladite ouverture de refoulement (OUT) est agencée de manière fonctionnelle pour transférer ladite partie dudit flux à un second composant ATS et/ou à un pot d'échappement.

2. Ensemble selon la revendication 1, dans lequel lesdites ouverture interne, ouverture externe, ouverture d'admission et ouverture de refoulement sont agencées de manière à induire un flux de gaz recirculé (F'), traversant ladite chambre, pour se déplacer à contre-courant par rapport audit flux (F) produit par ledit moteur à combustion interne.

3. Ensemble selon l'une quelconque des revendications précédentes, dans lequel ledit premier composant ATS est un piège à particules (DPF) un catalyseur d'oxydation diesel, DOC, ou un DOC et un DPF, agencés de préférence dans un gainage commun.

4. Ensemble selon l'une quelconque des revendications précédentes, dans lequel ledit premier composant ATS est agencé en amont dudit second composant ATS, de sorte que, ladite ouverture interne (INO) soit entre lesdits premier et second composants ATS.

5. Ensemble selon la revendication 4, dans lequel ledit second composant comporte au moins l'un parmi
- une réduction catalytique sélective (SCR),
- un catalyseur d'oxydation diesel (DOC),
- un catalyseur de nettoyage (CUC).

6. Ensemble selon la revendication 5, dans lequel ladite SCR est une SCR active, pourvue de son propre module de dosage (NZ) pour doser un agent de réduction à base d'urée, agencé immédiatement en amont de la SCR.

7. Ensemble selon l'une quelconque des revendications précédentes comprenant en outre un composant ATS supplémentaire approprié pour stocker un NOX tel qu'un NSC ou un PNA.

8. Ensemble selon l'une quelconque des revendications précédentes, dans lequel ledit gainage définit une chambre enveloppant ledit premier composant ATS et au moins lesdits second composant et/ou composant supplémentaire ATS.

9. Ensemble selon la revendication 8, dans lequel ladite ouverture interne (INO) est agencée en aval d'un filtre à particules DPF.

10. Ensemble selon la revendication 9, dans lequel, selon une circulation de gaz d'échappement, un DOC, un DPF et une SCR sont agencés successivement, dans lequel ladite ouverture interne (INO) est disposée entre ledit DPF et ladite SCR.

11. Ensemble selon l'une quelconque des revendications précédentes, dans lequel ladite ouverture interne comprend une embouchure orientée obliquement vers le composant ATS suivant, selon une circulation de flux de gaz d'échappement.

12. Ensemble selon l'une quelconque des revendications précédentes, comprenant en outre une soupape EGR (EGRV) également enveloppée dans ledit gainage (CN).

13. Moteur à combustion interne comprenant un ensemble selon l'une quelconque des revendications précédentes.

14. Moteur à combustion interne selon la revendication 13, comprenant au moins un turbocompresseur de suralimentation (T, C) et dans lequel ledit système EGR définit un système EGR à basse pression, de sorte que ledit tuyau EGR soit relié en amont d'un compresseur (C) dudit turbocompresseur de suralimentation (T, C).

15. Moteur à combustion interne selon la revendication 14, comprenant en outre un système EGR à haute pression pourvu de son propre refroidisseur, et dans lequel ledit système EGR à basse pression et ledit système EGR à haute pression sont sélectionnés alternativement ou ensemble pour faire recirculer une quantité prédéterminée de gaz d'échappement pour commander des émissions de NOX, afin de régler la température de travail de l'ATS.

16. Véhicule comprenant un moteur à combustion interne selon les revendications 13 à 15.
